# EUROPEAN PATENT SPECIFICATION

(11) **EP 1 805 012 B1**
(45) Date of publication and mention of the grant of the patent: **09.01.2013**
(21) Application number: 05797984.1
(22) Date of filing: 25.10.2005
(51) Int. Cl.: B32B 37/02, B32B 27/12, B32B 27/32

(54) **METHOD FOR PREPARING A COMPOSITE PRODUCT OF A POLYOLEFINIC ARTICLE AND A CLOTH**
VERFAHREN ZUR HERSTELLUNG EINES VERBUNDPRODUKTES AUS EINEM POLYOLEFINARTIKEL UND EINEM STOFF
PROCEDE POUR LA FABRICATION D'UN PRODUIT COMPOSITE COMPRENANT UN ARTICLE POLYOLEFINIQUE ET UN TISSU

(30) Priority: 25.10.2004 EP 04077932
(43) Date of publication of application: 11.07.2007
(73) Proprietor: Lankhorst Pure Composites B.V., 8607 AD Sneek (NL)
(72) Inventor: JACOBS, Johannes Antonius Joseph, NL-8447 EB Heerenveen (NL)
(74) Representative: Jansen, Cornelis Marinus
(86) International application number: PCT/NL2005/000764
(87) International publication number: WO 2006/046862

(56) References cited:
- WO-A-2004/028803
- DE-U1- 9 114 103
- FR-A- 2 558 147
- FR-A- 2 689 831
- US-A- 5 061 572

## Description

The invention relates to a method for preparing a composite product, of a polyolefinic article and a woven or non-woven cloth.

In composite materials yarns and cloths are often used for reinforcing by incorporating the yarn or cloth into a resin that is subsequently cured. Most commonly used are glass fibre materials. However, glass fibre materials have the disadvantage that they have a high density and thus tend to contribute significantly to the weight of the article. Furthermore, glass fibres make it very difficult to recycle the materials in which they are incorporated. It would be very useful if the glass fibres could be replaced by polymeric fibres or other polymeric reinforcement components, thereby making it easier to recycle the composite materials.

Polyolefinic articles have found use in a variety of applications wherein it is desired to provide the article with a particular surface finish, e.g. to provide a specific aesthetic or practical function. Such finish may be obtained by applying a cloth to the surface. However, the durability and/or strength of the adherence of the cloth to the article is not always fully satisfactory. It would therefore be desirable to provide a polyolefinic article with a cloth of which the attachment to the article is improved.

With respect to recycling of products produced from polyolefin materials, it would be an advantage if all components of the product could be classified as the same material, such as polypropylene or polyethylene (including copolymers and blends thereof, wherein propylene residues respectively ethylene residues form the majority of the monomeric units). The advantage thereof would be that the resulting recycled material would still be considered as essentially one material, instead of a blend of various components (no contamination).

WO-A-04/028803 discloses a method wherein articles are reinforced with a polymeric tape, film or yarn, comprising attaching to at least one surface of said article a tape, film or yarn of a drawn thermoplastic polymer. In particular, it is described to reinforce an article with a cloth of a polymer material with very high modulus, such as PURE®.

US-A-5 061 572 describes a thermoplastic elastomer laminate comprising a base fabric and a thermoplastic elastomers surface layer which are bonded through a polyolefin intermediate layer. The components can be integrated to a laminate by a heat fusion method, a sandwich lamination method or a hot melt method.

FR-A-2 689 831 describes a moulded article comprising a polypropylene support layer and a polypropylene covering. The components can be fused together by means of a modified polypropylene melting layer.

It is an object of the present invention to provide a novel method for preparing a composite product.

It is in particular an object of the present invention to provide a method wherein an improved adherence of the cloth to the article is achieved.

It has now been found that is possible to prepare a composite product by using a cloth that is provided with a special layer.

Accordingly, the present invention relates to a method for preparing a composite product, comprising bonding a polyolefinic article together with a woven or non-woven cloth, wherein at least the surface of the cloth that is bonded with the article comprises a backing-layer comprising a polyolefin.

In a preferred embodiment said bonding comprises the steps of contacting the cloth and the article at a temperature above the DSC softening point of the backing layer, and pressurizing the cloth and the article at a temperature below the DSC softening point of the backing layer.

This is found to be advantageous in order to let the cloth bond well to the article. It has in particular been found that thus the cloth can be bonded to the article very well, without needing to apply a separate adhesive film to the cloth or the article. Thereby the process is simplified, compared to a process requiring the use of such adhesive film.

Further, very good bonding is achieved without needing to pre-treat the article, such as by corona treatment.

Besides, the contacting above the DSC softening point and pressurising below the DSC softening point is found advantageous with respect to the speed of processing, since relatively low processing temperatures are applied during at least part of the process.

Bonding as used herein involves a physical bond (such as by adhesive forces, Van der Waals forces, polymer entanglements) and/or a chemical bond (such as by covalent bonding, electrostatic bonding) between the cloth and the article.

The cloth and article are first contacted at a temperature at which the backing layer softens and thereafter subjected to pressurization in a mould at a temperature below the softening point (i.e. softening temperature at atmospheric pressure), in particular at least 20 °C below the softening point of the backing layer. The pressure is then usually chosen such that the material under the applied pressure remains softened or softens. An advantage of this method is an improved cooling time.

In practice good results have been achieved with a cloth that is physically bonded to the article. In particular in case of bonding by a hot-melt or hot-compression technique intermingling of polymer of the article and polymer of the backing layer of the cloth may contribute to the bonding.

The binding strength of the cloth to the article may be about 2 N/cm or more, preferably about 5 N/cm or more. The upper limit is not particularly critical. In practice, a binding strength corresponding up to the force required to rupture the cloth is preferred.

The melting temperature or softening point as used herein is the DSC softening point as defined in ISO 11357-3, unless specified otherwise.

The invention may very suitably be applied for providing an article with a layer of cloth in a two-dimensional or three-dimensional manner. Herein the cloth may very suitably be bonded to a flat surface respectively a three-dimensionally shaped surface of the article.

The invention can be used to provide an article with a covering layer having an aesthetic function and/or technical function.

Examples of such aesthetic functions, include visual appreciation and a pleasant touch. Besides an aesthetic function, the cloth may impart a more practical purpose, such as an improved grip (making the surface less slick) or - to the opposite - making the surface smoother. Further, the cloth may be used for reinforcing the article.

Further, in an embodiment, use of a cloth has an advantageous effect upon suppression of the fragmentation of a product when it is subjected to a high impact, *e.g*. due to a collision or an explosion.

In particular, the invention has been found suitable for preparing a product for automotive/bodywork industry (*e.g*. car doors, mud guards, bumpers, engine covers, dash boards, door styles, clutch handles, clutch covers, safety belt holders), articles for the building/construction industry (*e.g*. ladders, scaffolds, wall-panels, ceiling panels, laths, cable-troughs, skirting-boards, beams, girders, tubes, pipes), articles for fluid transportation (*e.g*. tubes or pipes for the water industry, gas industry, oil industry, including off-shore industry), articles for marine yacht building, articles for ballistic purposes (*e.g*., protective panels, bomb explosion shells, protective shields, parts for vehicles), articles for medical/para-medical purposes (*e.g*. orthesic articles, cables, prostheses, tables for surgery, parts for wheel-chairs) or house-hold articles.

In principle, the cloth may be any sheet-like material. In particular, it may be made of any tape, yarn or other fibrous material. It may be woven or non-woven. It may be porous or non-porous.

The cloth may comprise one or more layers of tape, film or yarn. The cloth may be made in any way. Particularly suitable methods include weaving, knitting, and multiaxial stitch bonding. Such methods are commonly known in the art. Optionally, the cloth is compacted. By compacting, the tapes, films or yarns are bonded together and thus stiffness is improved, not only in the direction of the material. For economic reasons it is preferred to compact the material after it has been placed on the article to be reinforced.

Examples of suitable cloths include cloths made of polyolefinic tapes, films or yarns, nylon, silk, artificial leather (such as PVC- or TPO-based artificial leather), cotton. From a point of view of recyclability, particularly suitable is a cloth made of the same class of materials as the article. The term "same class" refers to a material that has the same type of monomer in excess. So for instance in case a polypropylene article is used, the cloth will also be formed by a polypropylene (*i.e*. a polymer mainly comprising propylene monomeric units) and that if the article is a polyethylene, the cloth will be formed by a polyethylene (*i.e*. a polymer mainly comprising ethylene monomeric units).

For a good adherence, it is considered advantageous that the cloth comprises polyethylene, polypropylene or a copolymer of ethylene and/or propylene, in particular in case the article and/or the backing layer comprise polyethylene, polypropylene or a copolymer of ethylene and/or propylene.

The cloth may be made of a material having substantially one melting point. In particular, in an embodiment wherein the cloth serves a reinforcing function, the cloth is preferably made from a tape or yarn such as described in WO-A-04/028803 or WO-A-03/008190, said tape, film or yarn being a drawn thermoplastic polyolefinic polymer of the AB or ABA type substantially consisting of a central layer (B) of a first thermoplastic polymer and one or two other layers (A) of a second thermoplastic polyolefinic polymer, the DSC melting point of the material of the said other layers (A) being lower than the DSC melting point of the material of the said central layer (B). Such tape, film or yarn preferably is a monoaxially drawn thermoplastic polyolefinic polymer, having a stretch ratio of more than 12 and having an E-modulus of at least 5 GPa, preferably of at least 10 GPa. Preferably, the tape, film or yarn substantially consists of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.% of the material. Preferably this material is made in a process comprising at least two stretching steps, wherein in a first ("cold") stretching step the composite monomaterial (*viz*. material comprising polyolefins of the same class) is stretched at a temperature below the DSC melting point of the outer layer, the temperature being preferably in the range of 25-75 °C, more preferably between 30 and 60 °C, followed by a second stretching step carried out at a higher temperature, for example at a temperature between 60 °C and the DSC melting point of the outer layer, or at a temperature of at least 100 °C.

The side of the cloth opposite to the backing layer may be provided with tufts, prints, a surface finish, or another layer with a practical or aesthetic function.

As a backing layer, in principle any polyolefin can be used that can be softened in order to bond the article and the cloth. Preferably, a polyolefin is chosen that is of the same class as the article (in terms of being suitable to be recycled together). The material for the backing layer is preferably chosen such that it has a DSC softening temperature that is lower than the melting temperature of the cloth itself and lower than the melting temperature of the core material of the article; in case the article is made of a tape, film or yarn of the AB or ABA type, a temperature that is at least lower than the central layer or inner layer (B).

In an advantageous embodiment, wherein the article is made of a tape, film or yarn of the AB or ABA type, the DSC softening temperature of the backing layer is about the same as that of the surface material ("A material") of the tape, film or yarn. In particular, a difference of up to about 3 °C is considered advantageous to cause intermingling of polymer molecules of the backing layer and of the "A material", thereby strengthening the bond.

Preferably, the backing layer is a thermoplastic elastomer. Suchelastomers can thermoreversibly melt and solidify. Within the context of the invention, an elastomer is a polymer material having a higher elongation at rupture than at least the material of both the article and the cloth that has the lowest elongation at rupture. In practice, the elastomer has an elongation at rupture of more than 10 %, preferably of more than 50 %.

Particularly suitable as a polyolefin for the backing layer is a copolymer of ethylene and propylene, in particular a block copolymer thereof.

Good results have been achieved with a polyethylene modified polypropylene such as HiFax, supplied by Basell (Hoofddorp, the Netherlands).

The thickness of the backing layer on the cloth may be chosen within wide limits. Preferably, the thickness of the backing layer on the cloth is at least about 5 µm. More preferably, the thickness is at least about 50 µm, in particular for a relatively rough cloth surface.

The backing layer may be provided to the cloth in any way. Preferably it is applied by laminate coating.

Preferably, the provision of the backing-layer to the cloth involves calendaring. A commercial cloth provided with backing layer is available from Entremonde (India).

Optionally, opposite to the side at which the backing layer for bonding to the article is positioned, the cloth may be provided with an additional surface layer, before or after bonding. In particular for obtaining an article with a pleasant soft touch and/or an improved grip, good results have been obtained with a method, wherein the cloth is provided with at least one component selected from tufts, foam layers and surface finish. In particular, a foam layer may be positioned in between the cloth and a surface finish. An example of a material with foam layer is a TPO-layer with polypropylene foam backing, available from Alvro.

From a recycling point of view, it is preferred that additional surface layer(s) are of the same class as the tape, film or yarn from which the shaped material is made.

Very good results have been achieved with a method wherein the additional surface layer, such as tufts, surface finish and/or the foam are selected from the group consisting of polyethylenes (PE), polypropylenes (PP) and copolymers of polyethylenes and polypropylenes (PE-PP). Very suitable is a material known to the skilled person as TPO (thermoplastic polyolefin), which in fact is a specific block copolymer based on PP and PE. TPO provides for an appreciable soft touch and/or improved grip. According to the present invention, very good results may be achieved with a method wherein the surface finish is TPO and the foam is polypropylene, which are present on a shaped material based on PP and/or PE tape.

In principle, the article to be bonded with the cloth can be made of any polyolefinic material. In particular suitable are articles comprising a polyethylene, a polypropylene or a combination thereof, preferably a copolymer of ethylene and propylene, more preferably an ethylene-propylene block copolymer or a propylene-ethylene block copolymer.

Good results have in particular been achieved with a (moulded) article that is made from a tape, film or yarn, said tape, film or yarn being a drawn thermoplastic polyolefinic polymer of the AB or ABA type substantially consisting of a central layer (B) of a first thermoplastic polymer and one or two other layers (A) of a second thermoplastic polyolefinic polymer, the DSC melting point of the material of the said other layers (A) being lower than the DSC melting point of the material of the said central layer (B). Such tape, film or yarn may be a monoaxially drawn thermoplastic polyolefinic polymer, having a stretch ratio of more than 12 and having an E-modulus of at least 5 GPa, preferably of at least 10 GPa. Preferably, the tape, film or yarn substantially consists of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.% of the material.

The backing layer may be pre-treated prior to the bonding to further improve bonding properties. Suitable techniques include techniques for increasing the polarity (surface energy) of the surface of the backing layer. Known techniques for improving the polarity of a surface include (O₂) plasma treatment, ionisation treatment and flame treatment. Suitable ionisation techniques are known in the art and include corona treatment, plasma treatment, ionisation by radiation and flame treatment. Corona treatment has been found to be particularly suitable.

Alternatively, the polarity of a surface may be increased by applying one or more compatibilisers thereto. For instance, maleic anhydride (MA) can be applied to improve the bonding between the surface of the shaped material (*e.g*. made of polypropylene tape) and the surface the article to be reinforced (*e.g*. made of aluminium or nylon). Other known compatibilisers, such as acrylic acid, may be used as well.

In particular, any of the above-mentioned surface pretreatment techniques may be used to introduce so-called selective wavelength groups on at least one of the surfaces. By subsequently applying radiation of a specific wavelength (*e.g*. microwave or IR) heat may be generated very locally at a predetermined part of the surface in this way. This provides for an improved bonding. An additional advantage of this technique is that the amount of heat applied may be carefully controlled and concentrated, since non-treated material can be chosen such that it is transparent to the radiation used (e.g. untreated PP and PE are transparent to microwave radiation). In this way the mechanical and other properties of the final article may be even better maintained. In particular for shaped material based on polypropylene this may be advantageous, because these articles may be radiated from the inner side (*viz*. the side away from the side to which the article is to be reinforced or away from the surface finish), while the outside is treated using one of the above-mentioned techniques, e.g. an ionisation step. As a result only the outermost layer will heat up, which is sufficient for obtaining a good bonding.

The cloth may be bonded to the article in any suitable way, for instance by laminating or heat-bonding (such as hot compacting) or an in-mould decoration technique.

Bonding can be achieved by contacting the surface of the article with the backing layer on the cloth and allowing the backing layer to soften, such that it functions as an adhesive between article and cloth. This can be achieved by choosing a suitable temperature and pressure. The skilled person will know to choose such temperature and pressure, based upon the product specification of the material of which the backing material is made.

In an embodiment the temperature during bonding is in the range of 120-170 °C.

Preferably, the polyolefin is softened by contacting the article and backing layer on the cloth at a temperature that is at least 5 °C above the DSC softening temperature of the polyolefin of the backing layer at the applied pressure, more preferably at least 10 °C above the DSC softening temperature.

The temperature is preferably chosen such that it is below the melting point of at least the highest melting polyolefin of the article and/or the highest melting material of the cloth; thus in case use is made of an article and/or cloth comprising a AB or ABA tape, film or yarn - as described above - the temperature is usually chosen below the melting temperature of the high melting material B. In practice, it is preferred that the temperature during softening of the backing layer does not exceed about 50 °C above the softening temperature, more preferably that the temperature during softening of the backing layer does not exceed about 40 °C above the softening temperature. An advantage of such a temperature is that the viscosity of the backing layer generally remains high enough to avoid undesirable levels of backing layer material leaking through the cloth (in case of a porous cloth), whilst a sufficient softening is realised to effectively bond the cloth and article (after solidifying).

The temperature can be brought to the desired temperature *e.g*. by infrared-treatment, microwave treatment, halogen treatment, contact heating, hot-air treatment etc. Other suitable manners of attaching that allow a good adherence, such that the cloth is not readily peeled off are known in the art.

The pressure during bonding is preferably at least 1 bar (absolute), wherein more preferably the above considerations for the temperature are taken into account. More preferably the pressure is at least 10 bar. The maximum pressure depends upon the maximum pressure the article and cloth can withstand without fracturing or otherwise irreversibly deforming to an unacceptable level. In practice, a pressure of up to about 50 bar is preferred. Good results may also be achieved with a pressure of up to about 20 bar.

The contacting at the temperature at which the polyolefin of the backing layer is softened is usually allowed to continue for a suitable time to achieve an adherence of the polyolefin to the article. Generally, a contacting time of about 10-45 sec suffices, although longer or shorter times may be employed. Preferably the contacting time is at least 15 sec. For practical reasons, the contacting time preferably does not exceed 10 min.

Thereafter the temperature and/or pressure are usually changed to a value at which the polyolefin of the backing layer solidifies again (*e.g*. ambient conditions), thereby forming the composite product.

The invention further relates to a method wherein a product made in accordance with the invention is recycled.

The invention is now elucidated on the basis of the following example.

### Example 1

A PURE® plate, made of 10 layers of woven PURE® tape (Lankhorst-Indutech, Sneek, the Netherlands) was placed on top of a cloth with backing layer from Entremonde (India), with the plate facing the backing layer.

Plate and cloth were clamped together at the edges and pre-heated in a hot air oven at 150 °C for a duration of 5 min.

The plate with cloth was taken out of the oven and placed in a pressible mould having a mould temperature of 50 °C. The mould was closed and a pressure of 15 bar was applied for a duration of 45 sec. (At the applied temperature and pressure the backing layer of the cloth was softened).

The resultant composite product was taken out of the mould and evaluated after it had cooled down to ambient temperature. The cloth was firmly bonded to the article and could not be peeled or torn off by hand.

The above experiment was repeated with a polypropylene cloth without a backing layer. The cloth was hardly bonded to the article and was easily torn off from the article.

## Claims

1. Method for preparing a composite product, comprising bonding a polyolefinic article together with a woven or non-woven cloth, wherein at least the surface of the cloth that is bonded with the article is provided with a backing-layer comprising a polyolefin, wherein said bonding comprises the steps of contacting the cloth and the article at a temperature above the DSC softening point of the backing layer, and pressurizing the cloth and the article at a temperature below the DSC softening point of the backing layer.

2. Method according to claim 1, wherein the polyolefin of the backing-layer has a DSC softening temperature that is lower than the melting temperature of the cloth itself and lower than the melting temperature of at least the core material of the article.

3. Method according to claim 1 or 2, wherein the polyolefin of the backing-layer is a copolymer of ethylene and propylene, preferably an ethylene-propylene block copolymer or a propylene-ethylene block copolymer.

4. Method according to any of the preceding claims, wherein the polyolefin of the backing layer is an elastomer.

5. Method according to any of the preceding claims, wherein the backing-layer is applied to the cloth by laminate coating.

6. Method according to any of the preceding claim, wherein the backing-layer applied to the cloth is calendared.

7. Method according to any of the preceding claims, wherein the backing-layer has a thickness of at least 5 µm, preferably in the range of 50 to 1000 µm.

8. Method according to any of the preceding claims, wherein the cloth is selected from the group consisting of polyolefines.

9. Method according to any of the preceding claims, wherein the article comprises a polyethylene, a polypropylene or a combination thereof, preferably a copolymer of ethylene and propylene, more preferably an ethylene-propylene block copolymer or a propylene-ethylene block copolymer.

10. Method according to any of the preceding claims, wherein the article is made from a tape, film or yarn, said tape, film or yarn being a drawn thermoplastic polyolefinic polymer of the AB or ABA type substantially consisting of a central layer (B) of a first thermoplastic polymer and one or two other layers (A) of a second thermoplastic polyolefinic polymer, the DSC melting point of the material of the said other layers (A) being lower than the DSC melting point of the material of the said central layer (B).

11. Method according to claim 10, wherein said tape, film or yarn is a monoaxially drawn thermoplastic polyolefinic polymer, having a stretch ratio of more than 12 and having an E-modulus of at least 5 GPa, preferably of at least 10 GPa.

12. Method according to claim 10 or 11, wherein the tape, film or yarn substantially consists of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt.% of the material and the other layers (A) between 1 and 50 wt.% of the material.

13. Method according to any of the preceding claims, wherein during the bonding the article and cloth are contacted at a temperature and pressure at which the backing-layer is softened, and thereafter pressure and/or temperature are reduced to a temperature and pressure at which the backing-layer is allowed to solidify, thereby forming the composite product.

14. Method according to claim 13, wherein the temperature during bonding is in the range of 50-170 °C, preferably 120-170 °C and the pressure is in the range of 1 to 50 bar absolute.

15. Method according to any of the preceding claims, wherein the composite product is a product selected from the group consisting of products for the automotive/bodywork industry, such as car doors, mud guards, bumpers, engine covers, dash boards, door styles, clutch handles, clutch covers, and safety belt holders; articles for the building/construction industry, such as ladders, scaffolds, wall-panels, ceiling panels, laths, cable-troughs, skirting-boards, beams, girders, tubes, and pipes; articles for fluid transportation, such as tubes or pipes for the water industry, gas industry, and oil industry, including off-shore industry; articles for marine yacht building; articles for ballistic purposes, such as protective panels, bomb explosion shells, protective shields, and parts for vehicles; articles for medical/para-medical purposes, such as orthesic articles, cables, prostheses, tables for surgery, and parts for wheel-chairs; and house-hold articles.

16. Composite product comprising (i) a polyolefenic article, which article comprises a polyethylene, a polypropylene or a combination thereof, wherein the article is made from a tape, film or varn, said tape, film or yarn being a drawn thermoplastic polyolefinic polymer of the AB or ABA type substantially consisting of a central layer (B) of a first thermoplastic polymer and one or two other layers (A) of a second thermoplastic polyolefinic polymer, the DSC melting point of the material of the said other layers (A) being lower than the DSC melting point of the material of the said central layer (B), wherein said tape, film or yarn is a monoaxially drawn thermoplastic polyolefinic polymer, having a stretch ratio of more than 12 and having an E-modulus of at least 5 GPa, preferably of at least 10 GPa, wherein the tape, film or yarn substantially consists of a central layer (B) of a polyolefin selected from polyethylene and polypropylene, and one or two other layers (A) of a polyolefin from the same class as the material of the central layer B, wherein the central layer (B) is between 50 and 99 wt.% of the material and the other layers (A) between 1 and 50 wt.% of the material, of which article at least a part of the surface is provided with (ii) a woven or nonwoven cloth, wherein the article and the cloth are attached to each other by (iii) an intermediate layer of a poleolefinic material, having a DSC softening temperature that is lower than the melting temperature of the cloth and lower than the melting temperature of at least the core material of the article.

## Patentansprüche

1. Verfahren zur Herstellung eines Verbundproduktes, umfassend das Binden eines Polyolefinartikels mit einem gewebten oder ungewebten Stoff, wobei mindestens die Oberfläche des mit dem Artikel gebundenen Stoffs mit einer Trägerschicht, umfassend ein Polyolefin, versehen ist, wobei das Binden die Schritte Kontaktieren des Stoffs und des Artikels bei einer Temperatur über dem DSC-Erweichungspunkt der Trägerschicht und Druckbeaufschlagung des Stoffs und des Artikels bei einer Temperatur unter dem DSC-Erweichungspunkts der Trägerschicht umfasst.

2. Verfahren nach Anspruch 1, wobei das Polyolefin der Trägerschicht eine DSC-Erweichungstemperatur hat, die niedriger als die Schmelztemperatur des Stoffs selbst und niedriger als die Schmelztemperatur von mindestens dem Kernmaterial des Artikels ist.

3. Verfahren nach Anspruch 1 oder 2, wobei das Polyolefin der Trägerschicht ein Copolymer von Ethylen und Propylen ist, vorzugsweise ein Ethylen-Propylen-Blockcopolymer oder ein Propylen-Ethylen-Blockcopolymer.

4. Verfahren nach einem der vorhergehenden Ansprüche, wobei das Polyolefin der Trägerschicht ein Elastomer ist.

5. Verfahren nach einem der vorhergehenden Ansprüche, wobei die Trägerschicht durch Laminatbeschichtung auf dem Stoff angebracht wird.

6. Verfahren nach einem der vorhergehenden Ansprüche, wobei die auf dem Stoff anzubringende Trägerschicht kalandert wird.

7. Verfahren nach einem der vorhergehenden Ansprüche, wobei die Trägerschicht eine Dicke von mindestens 5 µm, vorzugsweise im Bereich von 50 bis 1000 µm aufweist.

8. Verfahren nach einem der vorhergehenden Ansprüche, wobei der Stoff aus der Gruppe bestehend aus Polyolefinen ausgewählt ist.

9. Verfahren nach einem der vorhergehenden Ansprüche, wobei der Artikel ein Polyethylen, ein Polypropylen oder eine Kombination von diesen umfasst, vorzugsweise ein Copolymer von Ethylen und Propylen, noch bevorzugter ein Ethylen-Propylen-Blockcopolymer oder ein Propylen-Ethylen-Blockcopolymer.

10. Verfahren nach einem der vorhergehenden Ansprüche, wobei der Artikel aus einem Band, einem Film oder einem Garn hergestellt wird, wobei das Band, der Film oder das Garn ein gezogenes thermoplastisches polyolefines Polymer vom Typ AB oder ABA ist, im Wesentlichen bestehend aus einer zentralen Schicht (B) eines ersten thermoplastischen Polymers und einer oder zwei weiteren Schichten (A) eines zweiten thermoplastischen polyolefinen Polymers, wobei der DSC-Schmelzpunkt des Materials der anderen Schichten (A) niedriger als der DSC-Schmelzpunkt des Material der zentralen Schicht (B) ist.

11. Verfahren nach Anspruch 10, wobei das Band, der Film oder das Garn ein monoaxial gezogenes thermoplastisches polyolefines Polymer mit einem Dehnungsverhältnis von mehr als 12 und einem E-Modulus von mindestens 5 GPa, vorzugsweise von mindestens 10 GPa, ist.

12. Verfahren nach Anspruch 10 oder 11, wobei das Band, der Film oder das Garn im Wesentlichen aus einer zentralen Schicht (B) aus einem Polyolefin, ausgewählt aus Polyethylen und Polypropylen, und einer oder zwei weiteren Schichten (A) eines Polyolefins derselben Klasse wie das Material der zentralen Schicht B besteht, wobei der DSC-Schmelzpunkt des Materials der anderen Schichten (A) niedriger als der DSC-Schmelzpunkt des Materials der zentralen Schicht (B) ist, wobei die zentrale Schicht (B) zwischen 50 und 99 Gewichtsprozent des Materials und die anderen Schichten (A) zwischen 1 und 50 Gewichtsprozent des Materials betragen.

13. Verfahren nach einem der vorhergehenden Ansprüche, wobei während des Bindens der Artikel und der Stoff bei einer Temperatur und einem Druck kontaktiert werden, bei denen die Trägerschicht erweicht wird, und anschließend der Druck und/oder die Temperatur auf eine Temperatur und einen Druck reduziert werden, bei denen die Trägerschicht fest werden und so das Verbundprodukt bilden kann.

14. Verfahren nach Anspruch 13, wobei die Temperatur während des Bindens im Bereich von 15-170°C, vorzugsweise von 120-170°C, liegt, und der Druck im Bereich von 1 bis 50 absoluten Bar liegt.

15. Verfahren nach einem der vorhergehenden Ansprüche, wobei das Verbundprodukt ein Produkt ist, ausgewählt aus der Gruppe, bestehend aus Produkten für die Automobil-/Karosserieindustrie, wie beispielsweise Autotüren, Kotflügel, Stossstangen, Motorabdeckungen, Armaturenbrettern, Türpfosten, Kupplungsgriffen, Kupplungsabdeckungen und Sicherheitsgurthaltern; Artikel für Bau-/Anlagenbauindustrie wie beispielsweise Leitern, Gerüste, Wandpaneleen, Deckenpanellen, Decklatten, Kabelrinnen, Sockelleisten, Balken, Träger, Rohre, und Leistungen; Artikel zum Fluidtransport wie beispielsweise Rohre oder Leitungen für die Wasserindustrie, die Gasindustrie und die Ölindustrie, einschließlich die Offshore-Industrie; Artikel für den Jachtbau; Artikel für ballistische Zwecke wie beispielsweise Schutzpaneele, Bombenexplosionsgehäuse, Schutzschilde und Teile für Fahrzeuge; Artikel für medizinische/paramedizinische Zwecke wie beispielsweise Ortheseartikel, Kabel, Prothesen, Operationstische und Teile für Rollstühle und Haushaltsartikel.

16. Verbundprodukt, umfassend (i) einen polyolefinen Artikel, der ein Polyethylen, ein Polypropylen oder eine Kombination von diesen umfasst, wobei der Artikel aus einem Band, einem Film oder einem Garn hergestellt ist, das Band, der Film oder das Garn ein gezogenes thermoplastisches polyolefines Polymer vom Typ AB oder ABA ist, im Wesentlichen bestehend aus einer zentralen Schicht (B) eines ersten thermoplastischen Polymers und einer oder zwei weiteren Schichten (A) eines zweiten thermoplastischen polyolefinen Polymer, wobei der DSC-Schmelzpunkt des Materials der anderen Schichten (A) niedriger als der DSC-Schmelzpunkt des Materials der zentralen Schicht (B) ist wobei das Band, der Film oder das Garn ein monoaxial gezogenes thermoplastisches polyolefines Polymer mit eine Dehnungsverhältnis von mehr als 12 ist und einem E-Modulus von mindestens 5 GPa, vorzugsweise von mindestens 10 GPa aufweist, wobei das Band, der Film oder das Garn im Wesentlichen aus einer zentralen Schicht (B) eines Polyolefins, ausgewählt aus Polyethylen und Polypropylen und einer oder zwei weiteren Schichten (A) eines Polyolefins derselben Klasse wie das Material der zentralen Schicht B besteht, wobei die zentrale Schicht (B) zwischen 50 und 99 Gewichtsprozent des Materials ausmacht und die anderen Schichten (A) zwischen 1 und 50 Gewichtsprozent des Materials ausmacht, wobei mindestens ein Teil der Oberfläche des Artikels mit (ii) einem gewebten oder ungewebten Stoff versehen ist, wobei der Artikel und der Stoff durch (III) eine Zwischenschicht eines polyolefinen Materials mit einer DSC-Erweichungstemperatur, die niedriger als die Schmelztemperatur des Stoffs und niedriger als die Schmelztemperatur von mindestens dem Kernmaterial des Artikels ist, aneinander befestigt sind.

## Revendications

1. Procédé de préparation d'un produit composite, comprenant une liaison d'un article polyoléfinique à une étoffe tissée ou non tissée, dans lequel au moins la surface de l'étoffe qui est liée à l'article est dotée d'une couche support comprenant une polyoléfine, dans lequel ladite liaison comprend les étapes de mise en contact de l'étoffe et de l'article à une température supérieure au point de ramollissement d'analyse calorimétrique différentielle (ACD) de la couche support, et de mise sous pression de l'étoffe et de l'article à une température inférieure au point de ramollissement ACD de la couche support.

2. Procédé selon la revendication 1, dans lequel la polyoléfine de la couche support présente une température de ramollissement ACD inférieure à la température de fusion de l'étoffe elle-même et inférieure à la température de fusion au moins du matériau principal de l'article.

3. Procédé selon la revendication 1 ou 2, dans lequel la polyoléfine de la couche support est un copolymère d'éthylène et de propylène, de préférence un copolymère bloc d'éthylène-propylène ou un copolymère bloc de propylène-éthylène.

4. Procédé selon l'une quelconque des revendications précédentes, dans lequel la polyoléfine de la couche support est un élastomère.

5. Procédé selon l'une quelconque des revendications précédentes, dans lequel la couche support est appliquée à l'étoffe par revêtement par stratification.

6. Procédé selon l'une quelconque des revendications précédentes, dans lequel la couche support appliquée à l'étoffe est calandrée.

7. Procédé selon l'une quelconque des revendications précédentes, dans lequel la couche support présente une épaisseur d'au moins 5 µm, de préférence comprise dans la plage allant de 50 à 1 000 µm.

8. Procédé selon l'une quelconque des revendications précédentes, dans lequel l'étoffe est sélectionnée à partir du groupe constitué de polyoléfines.

9. Procédé selon l'une quelconque des revendications précédentes, dans lequel l'article comprend un polyéthylène, un polypropylène ou une combinaison de ceux-ci, de préférence un copolymère d'éthylène et de propylène, de manière davantage préférée un copolymère bloc d'éthylène-propylène ou un copolymère bloc de propylène-éthylène.

10. Procédé selon l'une quelconque des revendications précédentes, dans lequel l'article est constitué d'un ruban, d'un film ou d'un fil, ledit ruban, film ou fil étant un polymère polyoléfinique thermoplastique étiré du type AB ou ABA constitué essentiellement d'une couche centrale (B) d'un premier polymère thermoplastique et d'une ou de deux autres couches (A) d'un deuxième polymère polyoléfinique thermoplastique, le point de fusion ACD du matériau desdites autres couches (A) étant inférieur au point de fusion ACD du matériau de ladite couche centrale (B).

11. Procédé selon la revendication 10, dans lequel ledit ruban, film ou fil est un polymère polyoléfinique thermoplastique étiré de façon monoaxiale, présentant un rapport d'étirage supérieur à 12 et présentant un module d'élasticité d'au moins 5 GPa, de préférence d'au moins 10 GPa.

12. Procédé selon la revendication 10 ou 11, dans lequel le ruban, le film ou le fil est essentiellement constitué d'une couche centrale (B) d'une polyoléfine sélectionnée parmi un polyéthylène et un polypropylène, et d'une ou de deux autres couches (A) d'une polyoléfine provenant de la même classe que le matériau de la couche centrale B, le point de fusion ACD du matériau desdites autres couches (A) étant inférieur au point de fusion ACD du matériau de ladite couche centrale (B), dans lequel la couche centrale (B) représente entre 50 et 99 % en poids du matériau et les autres couches (A) représentent entre 1 et 50 % en poids du matériau.

13. Procédé selon l'une quelconque des revendications précédentes, dans lequel au cours de la liaison, l'article et l'étoffe entrent en contact à une température et à une pression auxquelles la couche support ramollit, et la pression et/ou la température sont ensuite réduites à une température et à une pression auxquelles la couche support peut se solidifier, formant ainsi le produit composite.

14. Procédé selon la revendication 13, dans lequel la température au cours de la liaison est comprise dans la plage allant de 50 à 170 °C, de préférence allant de 120 à 170 °C et la pression est comprise dans la plage allant de 1 à 50 bars absolus.

15. Procédé selon l'une quelconque des revendications précédentes, dans lequel le produit composite est un produit sélectionné à partir du groupe constitué de produits destinés au secteur de l'automobile/la carrosserie, tels que des portes de voiture, des garde-boue, des pare-chocs, des capots moteur, des tableaux de bord, des modèles de porte, des manettes d'embrayage, des plateaux de fermeture d'embrayage et des supports de ceinture de sécurité ; d'articles destinés au secteur du bâtiment/de la construction, tels que des échelles, des échafaudages, des panneaux muraux, des panneaux pour plafonds, des lattes, des chemins de câbles, des plinthes, des montants, des poutres, des tuyaux, et des conduits ; d'articles destinés au transport de fluide, tels que des tuyaux ou des conduits destinés au secteur de l'eau, au secteur du gaz et au secteur pétrolier, y compris le secteur en mer ; d'articles destinés à la construction navale de yachts ; d'articles destinés à un usage balistique, tels que des panneaux de protection, des protections contre les explosions de bombes, des boucliers de protection, et des pièces pour véhicules ; d'articles destinés à un usage médical/paramédical, tels que des articles orthopédiques, des câbles, des prothèses, des tables d'opération, et des pièces pour fauteuils roulants ; et d'articles électroménagers.

16. Produit composite comprenant (i) un article polyoléfinique, lequel article comprend un polyéthylène, un polypropylène ou une combinaison de ceux-ci, dans lequel l'article est constitué d'un ruban, d'un film ou d'un fil, ledit ruban, film ou fil étant un polymère polyoléfinique thermoplastique étiré de type AB ou ABA essentiellement constitué d'une couche centrale (B) d'un premier polymère thermoplastique et d'une ou de deux autres couches (A) d'un deuxième polymère polyoléfinique thermoplastique, le point de fusion ACD du matériau desdites autres couches (A) étant inférieur au point de fusion ACD du matériau de ladite couche centrale (B), dans lequel ledit ruban, film ou fil est un polymère polyoléfinique thermoplastique étiré de façon monoaxiale, présentant un rapport d'étirage supérieur à 12 et présentant un module d'élasticité d'au moins 5 GPa, de préférence d'au moins 10 GPa, dans lequel le ruban, le film ou le fil est essentiellement constitué d'une couche centrale (B) d'une polyoléfine sélectionnée parmi un polyéthylène et un polypropylène, et d'une ou de deux autres couches (A) d'une polyoléfine provenant de la même classe que le matériau de la couche centrale B, dans lequel la couche centrale (B) représente entre 50 et 99 % en poids du matériau et les autres couches (A) représentent entre 1 et 50 % en poids du matériau, duquel article au moins une partie de la surface est dotée (ii) d'une étoffe tissée ou non tissée, dans lequel l'article et l'étoffe sont liés l'un à l'autre par (iii) une couche intermédiaire d'un matériau polyoléfinique, présentant une température de ramollissement ACD inférieure à la température de fusion de l'étoffe et inférieure à la température de fusion au moins du matériau principal de l'article.
